**Europäisches Patentamt**

**European Patent Office**

**Office européen des brevets**

(11) Veröffentlichungsnummer: **0 075 307**
**A1**

## (12) EUROPÄISCHE PATENTANMELDUNG

(21) Anmeldenummer: **82108674.1**

(22) Anmeldetag: **20.09.82**

(51) Int. Cl.³: **B 60 P 1/64**

(30) Priorität: **23.09.81 DE 3137737**

(43) Veröffentlichungstag der Anmeldung: **30.03.83**
**Patentblatt 83/13**

(84) Benannte Vertragsstaaten: **AT BE CH FR GB IT LI LU NL SE**

(71) Anmelder: **FEKA Spezialmaschinen- und Fahrzeugbau GmbH, Ölmühlenweg 10-14, D-3500 Kassel (DE)**

(72) Erfinder: **Ullrich, Rolf, Karl-Marx-Strasse 5, D-3501 Heiligenrode-Niestetal (DE)**

(74) Vertreter: **Freiherr von Schorlemer, Reinfried, Brüder-Grimm-Platz 4, D-3500 Kassel (DE)**

(54) **Container-Ladeeinrichtung an Lastkraftwagen.**

(57) Vorrichtung an Lastkraftwagen zum An- und Abtransport von Containern mit einem klippbaren Rahmengestell zur Aufnahme der Container und mit einer Seilwindenanordnung (5) zum Heraufziehen der Container auf das Rahmengestell bzw. zum Herablassen der Container vom Rahmengestell auf den Boden, wobei die Seilwindenanordnung (5) zwei an Halbachsen (9, 10) befestigte Seiltrommeln (7, 8) zum Aufwickeln und Abwickeln von mit den Containern verbindbaren Drahtseilen (6) und ein Ausgleichsgetriebe (13) aufweist, dessen Eingang mit einem Antriebsmotor (15) und dessen beiden Ausgänge mit den Halbachsen (9, 10) verbunden sind, und wobei das Ausgleichsgetriebe (13) eine selbsttätig arbeitende, nach einem vorgegebenen Ausgleich in den Sperrzustand übergehende Sperrvorrichtung (21, 23) aufweist.

Vorrichtung an Lastkraftwegen zum An- und Abtransport von

Containern und selbstsperrendes Ausgleichsgetriebe für

eine derartige Vorrichtung

Die Erfindung betrifft eine Vorrichtung der im Oberbegriff
des Anspruchs 1 definierten Gattung und ein für derartige
Vorrichtungen geeignetes selbstsperrendes Ausgleichsgetriebe.

Vorrichtungen dieser Art dienen dazu, einen auf dem Boden
abgestellten Container auf einen Lastkraftwagen aufzunehmen, zu transportieren, zu kippen und wieder abzusetzen. Zu
diesem Zweck besitzen sie am vorderen Ende des kippbaren
Rahmengestells eine Antriebseinheit, die eine Seilwindeanordnung mit zwei rechts und links am vorderen Rahmenende angeordneten Seiltrommeln antreibt, auf die Drahtseile aufwickelbar sind, die mit ihren freien Enden am Container befestigt werden können. Beim Aufwickeln der Drahtseile auf
die Seiltrommeln wird der Container zunächst senkrecht hoch-
und dann über geeignete Führungselemente auf das angekippte
Rahmengestell aufgezogen.

Als Antriebseinheit sind insbesondere Ölmotoren bekannt
(DE-PS 14 30 408), bei deren Anwendung die beiden Seiltrommeln durch eine Welle starr miteinander verbunden sind.
Außerdem ist es bekannt, zum Antrieb der Seiltrommeln ein
Ausgleichsgetriebe zu verwenden, wobei die Seiltrommeln
auf Halb- oder Steckachsen montiert sind, die mit den Tellerrädern des Ausgleichsgetriebes verbunden werden.

Derartige Vorrichtungen arbeiten nur dann störungsfrei, wenn
es möglich ist, Seillängen-Differenzen der beiden ca. 9,5 m
langen Drahtseile so auszugleichen, daß Unterschiede, die
sich aus der Toleranz der Seildurchmesser, aus ungleichmäßiger Container-Beladung oder Geländeunebenheiten ergeben,
keine nachteilige Auswirkung auf das Aufziehen bzw. Ablassen
des Containers haben.

Bei der Anwendung eines auf starr verbundene Seiltrommeln wirkenden Ölmotors ist versucht worden, das Vorderteil des Rahmengestells über ein in dessen Mittelachse befindliches Gelenk so mit dem Rahmenhinterteil zu verbinden, daß eine begrenzte Schwenkbarkeit des Rahmenvorderteils zum Rahmenhinterteil möglich ist, oder die am Container vorgesehenen Anschlußteile für die Drahtseile in Containerlängsrichtung beweglich zu lagern und über ein Zugglied miteinander zu verbinden (DE-PS 14 30 408). Derartige Vorrichtungen genügen nicht ausreichend allen Anforderungen, die sich beim Aufziehen eines Containers auf das Rahmengestell ergeben können, oder machen sogar die Anwendung einer bestimmten Containerart erforderlich, was unerwünscht ist. Außerdem müssen aufwendige Ölmotoren eingesetzt werden, um die zum Aufziehen eines gefüllten Containers erforderlichen Drehmomente zu erzeugen.

Werden zur Vermeidung aufwendiger Ölmotoren dagegen Ausgleichsgetriebe eingesetzt, ergibt sich zwar der zusätzliche Vorteil, daß der erwünschte Ausgleich aufgrund der Konstruktion eines üblichen Ausgleichsgetriebes automatisch erzielt wird. Unvermeidbar und unter Umständen auch gefährlich ist bei der Anwendung eines Ausgleichsgetriebes jedoch der Umstand, daß die den Ausgleich bewirkenden Ausgleichsräder ständig arbeiten. Dies kann dazu führen, daß einseitig beladene Container oder solche, an die wegen der Geländebedingungen nicht exakt gerade herangefahren werden kann, nicht oder nur mit einem erheblichen Risiko aufgenommen werden können, weil in derartigen Fällen stets nur die geringer belastete Seiltrommel das ihr zugeordnete Drahtseil aufwickelt, während auf die andere Seiltrommel wegen der Ausgleichswirkung kein Drehmoment übertragen werden kann. Reißt beim Auf- oder Abladen eines der beiden Drahtseile, kann der Container außerdem unkontrolliert vom Rahmengestell herabrutschen, weil die das unbeschädigte Drahtseil tragende Seiltrommel wegen der Ausgleichswirkung lose abrollen kann. Es wäre zwar denkbar, auch bei Anwendung eines Getriebes und unter Verzicht auf die automatische Ausgleichswirkung beide Seiltrommeln starr miteinander zu verbinden und den erforderlichen Ausgleich der Drahtseile durch entsprechende Einrichtungen am Container zu besorgen. Für diesen Fall ist der Gleitabsetzkipper dann jedoch **nur für den Transport einer einzigen Containerart geeignet.**

Der Erfindung liegt die Aufgabe zugrunde, bei einer Vorrichtung der eingangs bezeichneten Art zwar einerseits die Anwendung des an sich erwünschten Ausgleichsgetriebes zu ermöglichen, andererseits jedoch zusätzlich eine Einrichtung vorzusehen, mittels der die genannten Nachteile eines üblichen Ausgleichsgetriebes vermieden werden können.

Zur Lösung dieser Aufgabe dienen die kennzeichnenden Merkmale des Anspruchs 1, während das erfindungsgemäße Ausgleichsgetriebe durch die Merkmale des Anspruchs 5 gekennzeichnet ist.

Weitere vorteilhafte Merkmale der Erfindung ergeben sich aus den Unteransprüchen.

Die Erfindung bringt den Vorteil mit sich, daß das Ausgleichsgetriebe nur einen begrenzten, beispielsweise entsprechend den üblichen Seiltoleranzen bemessenen Ausgleich ermöglicht und selbsttätig in den Sperrzustand übergeht, sobald dieser Ausgleich vorgenommen worden ist. Außerdem geht das Ausgleichsgetriebe auch dann nach einem begrenzten Ausgleich in den Sperrzustand über, wenn beispielsweise unterschiedliche Belastungen auf die Drahtseile wirken oder ein Drahtseil reißt. Beim Wegfall der Störung erfolgt automatisch wieder eine Entsperrung.

Es ist zwar bekannt, an Lastkraftwagen oder auch an Personenkraftwagen Ausgleichsgetriebe mit selbsttätig arbeitenden oder schaltbaren Sperrvorrichtungen vorzusehen. Die bekannten selbstsperrenden Ausgleichsgetriebe weisen jedoch als Reibkupplung wirkende Lamellenanordnungen auf, die keine
starre Begrenzung des Ausgleichs ermöglichen und daher unbrauchbar sind, während schaltbare Sperrvorrichtungen nicht
unter Last geschaltet werden können und daher den praktischen Bedürfnissen nicht ausreichend Rechnung tragen.

Die Erfindung wird nachfolgend in Verbindung mit der beiliegenden Zeichnung an einem Ausführungsbeispiel näher erläutert. Es zeigen:

Fig. 1 schematisch einen Lastkraftwagen mit einer Vorrichtung zum An- und Abtransport von Containern;

Fig. 2 eine schematische Seitenansicht der erfindungsgemäßen Seilwindenanordnung; und

Fig. 3 schematisch die Wirkungsweise des erfindungsgemäßen
    Ausgleichsgetriebes.

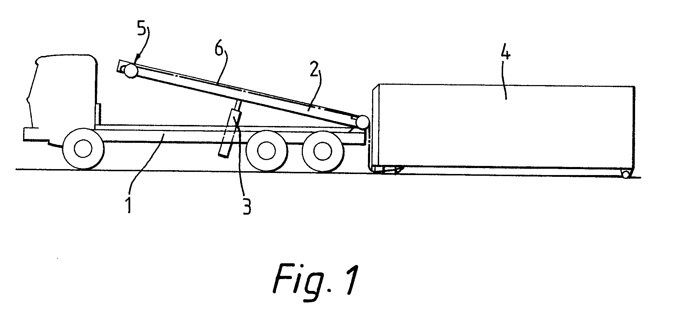

Fig. 1 zeigt einen Lastkraftwagen mit einem Fahrgestell 1,
an dessen hinterem Ende ein Rahmengestell 2 gelagert ist,
das mittels einer hydraulischen oder pneumatischen Kolben/
Zylinder-Einheit 3 um eine horizontal und quer zur Fahrzeuglängsrichtung angeordnete Achse auf- und abgeschwenkt werden
kann.

Das Rahmengestell 2 dient zur Aufnahme eines Containers 4.
Zum Heraufziehen des Containers 4 auf das gemäß Fig. 1 in
Kippstellung befindliche Rahmengestell dient eine allgemein
mit dem Bezugszeichen 5 bezeichnete und am Vorderende des
Rahmengestells montierte Seilwindenanordnung, die auf seitlich am Container befestigbare Drahtseile 6 einwirkt.

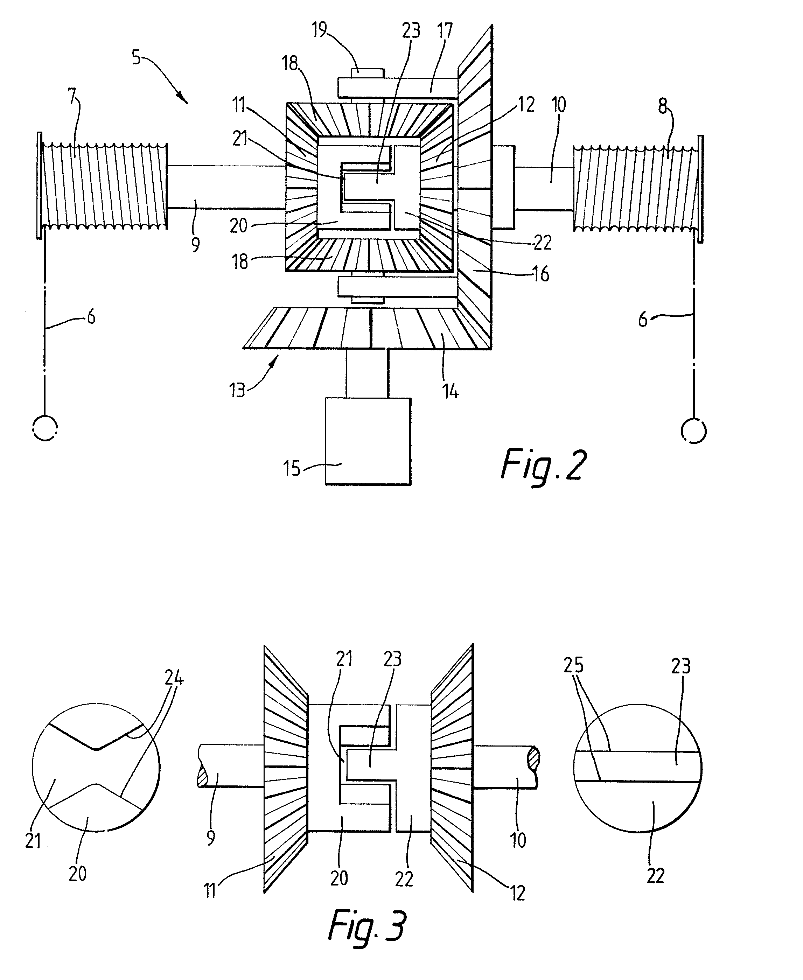

Gemäß Fig. 2 enthält die Seilwindenanordnung 5 zwei Seiltrommeln 7 und 8, die rechts und links am Vorderende des
nicht dargestellten Rahmengestells 2 auf als Steckachsen
ausgebildeten, koaxialen Halbachsen 9 und 10 befestigt sind.

Auf den einander zugewandten Enden der beiden Halbachsen 9 und 10 sind die Tellerräder 11 und 12 eines Ausgleichsgetriebes 13 befestigt. Dieses Ausgleichsgetriebe 13 enthält außerdem ein Antriebskegelrad 14, dessen Welle von einem Ölmotor 15 od. dgl. angetrieben wird, der ebenfalls an dem in Fig. 2 nicht dargestellten Rahmengestell 2 montiert oder direkt an das Ausgleichsgetriebe angeflanscht ist und beispielsweise über einen nicht dargestellten Kompressor und einen Druckschlauch mit dem Antriebsmotor des Lastkraftwagens verbunden wird.

Das Ausgleichsgetriebe 13 enthält weiterhin wie üblich ein großes Tellerrad 16 mit einer senkrecht zur Welle des Antriebskegelrads 14 angeordneten Achse, das mit dem Antriebskegelrad 14 kämmt und lose auf der Halbachse 10 sitzt, jedoch fest mit einem Gehäuse 17 verbunden ist. Im Inneren dieses Gehäuses 17 sind in bekannter Weise vier paarweise einander gegenüberstehende und miteinander kämmende Ausgleichskegelräder 18 frei drehbar gelagert, deren Wellen 19 fest mit dem Gehäuse 17 verbunden und in einer Ebene angeordnet sind, die senkrecht zu den Halbachsen 9,10 verläuft. Die Ausgleichskegelräder 18 sind außerdem entsprechend Fig. 2 mit den Tellerrädern 11 und 12 im Eingriff.

Erfindungsgemäß sind die einander zugewandten Enden der beiden Halbachsen 9 und 10 bis in das Gehäuse 17 hinein verlängert. Das Ende der Halbachse 9 ist mit einem Sperrteil 20 versehen, an dessen Stirnseite eine Nut 21 ausgebildet ist, während das zugewandte Ende der Halbachse 10 ein Sperrteil 22 aufweist, das an seiner Stirnseite einen in die Nut 21 ragenden Ansatz 23 enthält, so daß die beiden Sperrteile 20 und 22 nach Art einer Nut/Feder-Verbindung miteinander verbunden sind. Der Ansatz 23 ist dabei nicht formschlüssig, sondern mit so viel Spiel innerhalb der Nut 21 angeordnet, daß die beiden Halbachsen 9 und 10 eine begrenzte Relativdrehung in beide Richtungen ausüben können. Der Bereich dieser möglichen Relativdrehung der beiden Halbachsen relativ zueinander kann durch entsprechende Bemessung der Größen der Nut 21 und des Ansatzes 23 vorgegeben werden und wird
beispielsweise in Abhängigkeit davon gewählt, welche Toleranzen die Drahtseile 6 aufweisen können bzw. wie groß der
mit dem Ausgleichsgetriebe 13 erzielbare maximale Ausgleich
sein soll.

Gemäß einer bevorzugten, insbesondere aus Fig. 3 ersichtlichen Ausführungsform ist die Nut 21 von dreieckförmigen Seitenwänden 24 begrenzt, die im Bereich ihrer abgerundeten
Spitzen den kleinsten Abstand voneinander aufweisen, wohingegen die entsprechenden Seitenwände 25 des Ansatzes 23 geradlinig und parallel zueinander ausgebildet sind und einen
Abstand voneinander aufweisen, der etwa dem Abstand der beiden Spitzen der Seitenwände 24 entspricht.

Die Wirkungsweise der beschriebenen Vorrichtung ist wie folgt:

Bei gleichmäßiger Beladung des Containers 4 wirkt auf beide
Drahtseile 6 dieselbe Zugbelastung. Die Kraftübertragung erfolgt dabei vom Ölmotor 15 über das Antriebskegelrad 14 zunächst auf das große Tellerrad 16, das sich auf der Halbachse 10 dreht und das Gehäuse 17 in Umdrehungen versetzt.
Dadurch werden die Wellen 19 der Ausgleichskegelräder 18
mitgenommen, die ihrerseits das auf das Gehäuse 17 ausgeübte
Drehmoment auf die beiden Tellerräder 11 und 12 und damit
auf die Seiltrommeln 7 und 8 übertragen. Solange dabei die
auf beide Drahtseile 6 wirkende Zugbelastung gleich ist,
drehen sich die Ausgleichskegelräder 18 nicht um ihre Achsen, und die aus der Nut 21 und dem Ansatz 23 gebildete
Sperrvorrichtung hat keine Wirkung.

Wirken bei dieser Betriebsweise jedoch ungleichgroße Belastungen auf die beiden Drahtseile 6, beispielsweise weil
der Container 4 ungleichmäßig beladen ist, drehen sich die
Ausgleichskegelräder 19 auch um ihre Achsen, und zwar in
der Weise, daß die geringer belastete Seiltrommel schneller,
die stärker belastete Seiltrommel dagegen langsamer ange-

trieben wird, als der Drehzahl des großen Tellerrades 16 entspricht, wodurch der an sich bekannte Ausgleich erfolgt. Erfindungsgemäß ist ein derartiger Ausgleich jedoch nur so lange möglich, bis eine Seitenwand 25 des Ansatzes 23 an die zugehörige Seitenwand 24 der Nut 21 anschlägt. Ab diesem Zeitpunkt ist dann ein weiterer Vorlauf des einen Tellerrades 11 oder 12 bzw. ein weiterer Rücklauf des anderen Tellerades nicht mehr möglich, so daß im weiteren Verlauf beide Seiltrommeln 7 und 8 mit gleicher Drehzahl angetrieben werden, selbst wenn ihre Belastung weiterhin ungleich groß ist. Die Nut 21 und der Ansatz 23 bilden somit eine selbsttätig arbeitende, nach einem vorgegebenen Ausgleich in den Sperrzustand übergehende Sperrvorrichtung.

Wenn der ungleichmäßig beladene Container 4 auf das in Kippstellung befindliche Rahmengestell 2 aufgelaufen und auf diesem zentriert ist, kann das Ausgleichsgetriebe in Abhängigkeit von den im Einzelfall vorhandenen Seillängen und Belastungsverhältnissen entweder selbsttätig in den ungesperrten Zustand übergehen und dann als normales Ausgleichsgetriebe arbeiten oder bis zur völligen Aufnahme des Containers 4 auf dem Rahmengestell in der Sperrstellung verbleiben.

Ein besonderer Vorteil des erfindungsgemäßen Ausgleichsgetriebes besteht darin, daß ein Container, der bereits ganz oder teilweise angehoben oder ganz oder teilweise auf ein in Kippstellung befindliches Rahmengestell gezogen worden ist, selbst beim Reißen eines der Drahtseile nicht unkontrolliert abrutschen kann, wie es bei Anwendung herkömmlicher Ausgleichsgetriebe der Fall wäre. Reißt nämlich ein Drahtseil 6, kann sich die vom Container belastete, dem anderen Drahtseil zugeordnete Seiltrommel nur um das zwischen dem Ansatz 23 und der Nut 21 vorgesehene Spiel in der dem Antrieb entgegengesetzten Richtung drehen. Nach dieser Drehung ist sie dann fest mit der anderen Seiltrommel verriegelt, so daß der Container über deren Drahtseil gehalten wird. Die Kraftübertragung erfolgt dabei über das große Tellerrad 16 und das Gehäuse 17 direkt auf das unbeschädigte Drahtseil, weil sich die Ausgleichskegelräder 18 wegen des hergestellten Sperrzustands nicht um ihre Achsen drehen können.

Die Erfindung ist nicht auf das beschriebene Ausführungsbeispiel beschränkt, das auf verschiedene Weise abgewandelt werden kann. Insbesondere die zur selbsttätigen Sperrung bzw. Entsperrung des Ausgleichsgetriebes vorgesehenen Mittel können durch andere Mittel mit gleicher Funktion ersetzt werden. Auch die Anwendung anderer Ausführungsformen des Ausgleichsgetriebes ist möglich. Anstelle der Container können andere Wechselaufbauten, z.B. in Form von Raumzellen, vorgesehen sein.

Patentanwalt
Diplom-Physiker
**Reinfried Frhr. v. Schorlemer**

D-3500 Kassel
Brüder-Grimm-Platz 4
Telefon (0561) 1 53 35

D 5178

FEKA Fabrik für Spezialfahrzeuge Kraft & Co.

Patentansprüche

1) Vorrichtung an Lastkraftwagen zum An- und Abtransport von Containern mit einem kippbaren Rahmengestell zur Aufnahme der Container und mit einer Seilwindenanordnung zum Heraufziehen der Container auf das Rahmengestell bzw. zum Herablassen der Container vom Rahmengestell auf den Boden, wobei die Seilwindenanordnung zwei an Halbachsen befestigte Seiltrommeln zum Aufwickeln und Abwickeln von mit den Containern verbindbaren Drahtseilen und ein Ausgleichsgetriebe aufweist, dessen Eingang mit einem Antriebsmotor und dessen beiden Ausgänge mit den Halbachsen verbunden sind, dadurch gekennzeichnet, daß das Ausgleichsgetriebe (13) eine selbsttätig arbeitende, nach einem vorgegebenen Ausgleich in den Sperrzustand übergehende Sperrvorrichtung aufweist.

2) Vorrichtung nach Anspruch 1, dadurch gekennzeichnet, daß die Sperrvorrichtung aus an den Halbachsen (9,10) vorgesehenen, eine begrenzte Relativdrehung der beiden Halbachsen (9,10) zulassenden Sperrteilen (20,22) besteht.

3) Vorrichtung nach Anspruch 1 oder 2, dadurch gekennzeichnet, daß die einander zugewandten Stirnflächen der beiden Sperrteile (20,22) nach Art einer Nut/Feder-Verbindung ausgebildet und miteinander verbunden sind.

0075307

4) Vorrichtung nach Anspruch 3, dadurch gekennzeichnet, daß das eine Sperrteil (20) eine Nut (21) aufweist, die durch dreieckförmige Seitenwände (24) begrenzt ist, die im Bereich ihrer Spitzen den kleinsten Abstand voneinander aufweisen, und daß das andere Sperrteil (22) einen in die Nut (21) ragenden, durch geradlinige und parallele Seitenwände (25) begrenzten Ansatz (23) aufweist.

5) Selbstsperrendes Ausgleichsgetriebe für eine Vorrichtung nach wenigstens einem der Ansprüche 1 bis 4, dessen Tellerräder mit je einer Halbachse verbunden sind, dadurch gekennzeichnet, daß es eine nach einem vorgegebenen Ausgleich in den Sperrzustand übergehende Sperrvorrichtung (21,23) aufweist.

*Fig. 1*

0075307

2/2

Fig.2

Fig.3

Europäisches
Patentamt

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | AT – B – 294 595 (AUTOLAVA) <br><br> — | | B 60 P 1/64 |
| A | GB – A – 1 093 194 (MURFITT BULK TRANSPORTERS) <br><br> — | | |
| D,A | DE – C – 1 430 408 (AUTOLAVA) <br><br> ———— | | |

RECHERCHIERTE SACHGEBIETE (Int. Cl.³)

B 60 P 1/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 29-11-1982 | LUDWIG |

EPA form 1503.1  06.78